# EUROPEAN PATENT APPLICATION

(11) **EP 4 570 514 A1**
(43) Date of publication of application: **18.06.2025**
(21) Application number: 24216839.1
(22) Date of filing: 02.12.2024
(51) Int. Cl.: B60C 7/14, B60C 7/24

(54) **NON-PNEUMATIC TIRE COMPRISING SPOKES**

(30) Priority: 11.12.2023 US 202318534869
(71) Applicant: The Goodyear Tire & Rubber Company, Akron, OH 44316 (US)
(72) Inventor: HINQUE, Daniel Paul Luc Marie, B-6720 Habay-la-Neuve (BE); MARTIN, Arnaud Fabrice, 54430 Réhon (FR); SPORTELLI, Francesco, 3249 Bettembourg (LU); RICHARD, Olivier Jean-Pierre, B-6740 Fratin (BE)
(74) Representative: Kutsch, Bernd

(57) **Abstract**

A non-pneumatic tire is disclosed comprising a radially outer circumferential band portion comprising a circumferential tread portion, a radially inner hub portion and a supporting structure comprising a plurality of spokes extending from the hub portion to the circumferential band portion. At least one spoke of the plurality of spokes comprises a radially inner head portion adjacent the hub portion and a radially outer foot portion adjacent the circumferential band portion. In one aspect, at least the radially outer foot portion is mechanically interlocked with the radially outer circumferential band portion and/or is removably mounted to the radially outer circumferential band portion. In another aspect, the spoke comprises a polymer composition, wherein at least one of the radially inner head portion and the radially outer foot portion comprises an attachment surface at least partially formed by a material harder than the polymer composition, and wherein a portion of the radially outer circumferential band portion and the radially inner hub portion, which is adjacent and in contact with the attachment surface, is at least partially formed by one or more of the material and another material harder than the polymer composition.

## Description

### Field of the Invention

The present invention is directed to a non-pneumatic tire comprising a supporting structure, particularly comprising a plurality of spokes, such as polymer composition spokes.

### Background of the Invention

Some non-pneumatic tires comprise a circumferential tread band and a circumferential hub portion connected with each other by a supporting structure comprising spokes. It can be a challenge to manufacture such tires cost-efficiently and/or in mass production. Furthermore, as for many tire types, it can be difficult to repair such a tire's supporting structure which has been damaged during use. While progress has been made in the development of non-pneumatic tires over the past years, significant room for improvement remains.

### Summary of the Invention

The invention relates to a non-pneumatic tire in accordance with claim 1.

Dependent claims refer to preferred embodiments of the invention.

In a first preferred aspect, the present invention is directed to a non-pneumatic tire comprising a radially outer circumferential band portion comprising a circumferential tread portion, a radially inner hub portion, and a supporting structure comprising a plurality of spokes extending from the hub portion to the circumferential band portion. At least one spoke of the plurality of spokes comprises a radially inner head portion adjacent the hub portion and a radially outer foot portion adjacent the circumferential band portion, wherein the radially outer foot portion is mechanically interlocked with the radially outer circumferential band portion.

In a second preferred aspect, the present invention is directed to a non-pneumatic tire comprising a radially outer circumferential band portion comprising a circumferential tread portion, a radially inner hub portion, and a supporting structure comprising a plurality of spokes extending from the hub portion to the circumferential band portion. At least one spoke of the plurality of spokes comprises a radially inner head portion adjacent the hub portion and a radially outer foot portion adjacent the circumferential band portion, wherein at least the radially outer foot portion is removably mounted to the radially outer circumferential band portion.

In a third preferred aspect, the present invention is directed to a non-pneumatic tire comprising a radially outer circumferential band portion comprising a tread, a radially inner hub portion, and a supporting structure comprising a plurality of spokes extending between the hub portion and the circumferential band portion. At least one spoke of the plurality of spokes comprises a radially inner head portion adjacent the hub portion and a radially outer foot portion adjacent the circumferential band portion, wherein the spoke comprises a polymer composition, and wherein at least one of the radially inner head portion and the radially outer foot portion comprises an attachment surface at least partially formed by a material harder than the polymer composition. Still in accordance with the third aspect, a portion of the radially outer circumferential band portion and the radially inner hub portion, which is adjacent and in contact with the attachment surface, is at least partially formed by one or more of the material and another material harder than the polymer composition.

### Brief Description of the Drawings

The invention will be described by way of example and with reference to the accompanying drawings in which:
FIG. 1 is a schematic perspective view of a non-pneumatic tire in accordance with an embodiment of the present invention;
FIG. 2 is a partial schematic cross-section of a circumferential sector of the supporting structure of the non-pneumatic tire shown in Figure 1;
FIG. 3 is a schematic partial perspective view of a circumferential sector of the radially outer band portion and of the supporting structure of the tire shown in Figures 1 and 2;
FIG. 4 is a schematic partial perspective view of a circumferential sector of a radially inner annular connecting portion of the circumferential band portion in accordance with another embodiment of the present invention;
FIG. 5 is a schematic perspective view of a spoke having an axially tapering foot portion in accordance with an embodiment of the present invention;
FIG. 6 is a schematic partial cross-section, perpendicular to the circumferential direction of a tire, of a spoke, such as the spoke of Figure 5, mounted to a hub portion in accordance with yet another embodiment of the present invention;
FIG. 7 is a schematic perspective view of a cord-reinforced rubber composition spoke having a foot portion with a partially embedded polymer material harder than the rubber composition of the spoke;
FIG. 8 is another schematic perspective view of a cord-reinforced rubber composition spoke in accordance with still another embodiment of the present invention, the spoke comprising a fabric extending through the spoke including a foot portion of the spoke, which comprises a polymer material harder than the rubber composition of the spoke;
FIG. 9 is a schematic cross-section of a polymer composition spoke with an embedded metal rail in its foot portion, in accordance with still another embodiment of the present invention;
FIG. 10 is a schematic perspective view of a circumferential sector of a radially outer band portion of another non-pneumatic tire in accordance with an embodiment of the present invention, which is suitable to receive the spoke shown already in Figure 9 in a corresponding slot comprising metal plates;
FIG. 11 is a schematic perspective view of a metal rail for receiving a foot portion of a spoke, such as the spoke already shown in Figure 9, and which can be embedded in the radially outer band portion to slidingly receive and hold such a spoke; and
FIG. 12 is a schematic cross-section of another preferred embodiment of a polymer composition spoke, which comprises circumferentially protruding supporting portions supporting the spoke on respective adjacent connecting portions of the radially outer band and the radially inner hub portion, wherein the supporting portions have different radial heights on circumferentially opposite sides of the spoke.

### Detailed Description of Preferred Embodiments of the Invention

In the first preferred aspect, the invention is directed to a non-pneumatic tire comprising a radially outer circumferential band portion comprising a circumferential tread portion, a radially inner (circumferential) hub portion, and a (circumferential) supporting structure comprising a plurality of spokes extending from the hub portion to the circumferential band portion. At least one spoke of the plurality of spokes comprises a radially inner head portion adjacent the hub portion and a radially outer foot portion adjacent the circumferential band portion, wherein the radially outer foot portion is mechanically interlocked with the radially outer circumferential band portion. Thus, one or more spokes (such as a majority of or all of the spokes) are connected to the radially outer circumferential band portion by mechanical interlocking which allows for instance easy assembly and/or connection. Preferably, such a connection by mechanical interlocking allows demounting of said spoke from the circumferential band portion, for example, in case one or more spokes have been damaged during tire usage. Adhesives and/or co-curing of the spokes to the band portion can be avoided.

Preferably, the radially outer circumferential band portion comprises a radially inner annular connecting portion, and/or the radially inner hub portion comprises a radially outer annular connecting portion.

Preferably, each of the head portion and the foot portion is mechanically interlocked with a respective adjacent (e.g., annular connecting) portion of the radially outer circumferential band portion and the radially inner hub portion. In such an embodiment, mounting of the spoke and/or assembly of the tire is simple and and/or flexible. Optionally, the spoke, or a majority of the spokes, or preferably all spokes are removably mechanically interlocked.

Preferably, one or more of the hub portion, the band portion, the radially inner annular connecting portion, the radially outer annular connecting portion, and the spoke(s) comprise one or more polymer compositions. One or more of such polymer compositions could be cord and/or fiber reinforced. Preferably, the spokes, or at least a majority of the spokes are cord-reinforced polymer composition spokes, such as cord-reinforced elastomer (e.g., rubber) composition spokes. Optionally, a cord-reinforcement may be provided as a fabric extending at least partially along the spoke, such as in the radial direction, and comprising multiple parallel cords. As another option, an elastomer composition spoke may comprise at least partially embedded members of another material, e.g., harder than the elastomer composition.

Preferably, the polymer compositions comprise one or more of elastomer compositions (e.g., rubber compositions) and thermoplastic polymer compositions (e.g., thermoplastic elastomer, such as thermoplastic polyester elastomer).

Preferably, the spoke comprises one or more of an elastomer composition and a thermoplastic polymer and one or more of the annular connecting portions comprise one or more of a thermoplastic polymer and an elastomer composition.

In a preferred embodiment, the spoke comprises one or more of an elastomer composition and a thermoplastic polymer and one or more of the annular connecting portions comprise a thermoplastic polymer. Preferably, the spoke comprises an elastomer composition (such as a rubber composition) and one or more of the annular connecting portions comprise a thermoplastic polymer.

In still another preferred embodiment, the spoke comprises an elastomer composition (e.g., a rubber composition) and one or more of the annular connecting portions comprise an elastomer composition (e.g., a rubber composition). Both elastomer compositions may be the same, or different.

In another preferred embodiment, the polymer composition is an elastomer composition, such as a rubber composition. Optionally, said elastomer composition (such as the rubber composition) comprises one or more of rubber (such as comprising one or more of natural rubber, synthetic polyisoprene, butadiene rubber, styrene-butadiene rubber, and butyl rubber), a filler (such as comprising one or more of carbon black and silica), resin (such as a hydrocarbon resin selected from one or more of coumarone-indene resins, petroleum hydrocarbon resins, terpene resins, styrene/alphamethylstyrene resins, terpene phenol resins, rosin derived resins and copolymers and/or mixtures thereof), accelerators, antidegradants, oils, liquid diene-based polymers, coupling agents (such as carbon black coupling agents and/or silanes), sulfur donors, and sulfur. Liquid means herein that a material is in a liquid state at 23°C. The composition may be a sulfur-curable or sulfur-cured rubber composition. Optionally, elastomer compositions, such as rubber compositions, may be fiber-reinforced.

In still another preferred embodiment, the elastomer compositions or rubber compositions comprise 100 phr of rubber comprising one or more of natural rubber, synthetic polyisoprene, polybutadiene rubber, and styrene butadiene rubber. Preferably, the composition comprises at least 50 phr of natural rubber (such as from 50 phr to 100 phr of natural rubber, and optionally from 0 phr, or 5 phr, to 50 phr of polybutadiene rubber). Additionally, the elastomer or rubber compositions comprise a filler, preferably comprising carbon black and/or silica. For instance, such filler may be within a range of 20 phr to 150 phr, preferably within a range of 30 phr to 90 phr. Preferably, such a filler comprises predominantly carbon black. The elastomer or rubber composition may further comprise from 1 phr to 40 phr of resin, preferably including a phenolic resin. Moreover, the elastomer or rubber composition may comprise from 1 phr to 30 phr of oil, preferably from 1 phr to 20 phr of oil. Finally, the elastomer or rubber composition may typically comprise from 1 phr to 15 phr of antidegradant(s), from 0.5 phr to 10 phr of accelerator(s), from 0.1 phr to 10 phr of zinc oxide, and from 0.5 phr to 10 phr of sulfur. Further ingredients may also be present.

In still another preferred embodiment, the spoke is cord and/or fiber-reinforced, wherein one or more cords and/or fibers optionally comprise one of textile, carbon, metal, bio-based, polymer, and glass fiber material.

In still another preferred embodiment, the cord and/or fibers comprise a textile material, optionally selected from one or more of polyester (preferably, PET), polyamide (preferably, one or more of PA-6, PA-6,6, e.g., Nylon^{™}, aromatic polyamide / aramid), and rayon. Optionally, one or more of these materials may be recycled materials. Using hybrid materials or cords and/or fibers of multiple such materials is also an option.

In another preferred embodiment, cords provided herein are one or more of single filament cords and multifilament cords. For instance, cords may have (maximum) diameters measured perpendicularly to the extension of the cord in the spoke within a range of 0.01 mm to 2 mm, preferably within a range of 0.01 mm and 1 mm, measured after extraction of the cord from the spoke of the tire.

In still another preferred embodiment, at least one of the radially inner head portion and the radially outer foot portion comprises an anchoring portion which is held, engaged, and/or anchored in a complementary anchoring slot of a respective adjacent portion of the radially outer circumferential band portion and the radially inner hub portion. Preferably, the slot extends essentially in an axial direction of the tire and/or the anchoring portion is one or more of axially insertable and axially removable in the slot. In other words, the anchoring portion is held by mechanical interlocking in the slot, such as against movement in a radial direction. It is possible to describe the anchoring portion as a male portion, or male anchoring portion, and the anchoring slot as a female portion, or a female anchoring portion. Optionally, one or more of the head portion and the foot portion of a spoke may comprise two or more anchoring portions.

In still another preferred embodiment, the anchoring portion is one or more of i) inserted or slidable along an axial direction; ii) held and/or anchored against movement in a radial direction, preferably in an axially extending anchoring slot in the respective adjacent portion of the radially outer circumferential band portion and the radially inner hub portion; and iii) comprising one or more of a dovetail-shaped cross-section, an H-shaped cross-section, a double-T-shaped cross-section, a chevron-shaped cross-section, a polygonal-shaped cross-section, an ellipsoidal-shaped cross-section, a circular-shaped cross-section, and a star-shaped cross-section. Such cross-sections are in parallel to the equatorial plane of the tire. The above-mentioned slot may, e.g., be formed in a circumferential and radially inner portion or layer of a shearband of the circumferential band portion.

In still another preferred embodiment, the anchoring portion is additionally press-fit in an axial direction (i.e., in a first axial orientation) into the anchoring slot. Optionally, the spoke and/or the anchoring portion can be demounted or removed again in an axial orientation opposite to the first axial orientation, e.g., by strokes in that orientation.

In another preferred embodiment, the circumferential band portion comprises one or more of a radially outer and circumferential tread portion, a circumferential shearband (optionally comprising multiple circumferential rubber composition layers) supporting the circumferential tread portion, and a radially inner annular connecting portion arranged radially inwards the tread portion and/or the shearband. Preferably, the radially inner annular connecting portion may comprise said anchoring slot(s) along the circumferential direction of the annular connecting portion. Optionally, the annular connecting portion comprises one or more of a circumferentially closed ring, a plurality of circumferentially arranged polymer composition members, such as blocks. Optionally, each polymer composition member comprises one or more anchoring slots for receiving an anchoring portion of a spoke. The annular connecting portion and/or its members may be co-cured or attached to the tread portion and/or shearband via an adhesive. One or more layers of the shearband may be cord-reinforced, such as with cord materials already mentioned herein above in relation to spoke reinforcements.

In still another preferred embodiment, multiple components, members or portions mentioned herein (such as one or more of the circumferential band portion, the circumferential tread portion, the circumferential shearband, the radially inner annular connecting portion, the radially outer annular connecting portion, and the hub portion), are one or more of integrally formed, adhered, cured, and co-cured to one another. Such molding and/or connection techniques as such are known to the person skilled in the art. For instance, it is possible to attach multiple components, members or portions comprising uncured and/or cured elastomer or rubber compositions together and co-cure them. Preferably, they are sulfur cured to each other. Peroxide cure is another option. Additionally, or alternatively, uncured rubber, primers or dips (such as RFL-based) and/or adhesives can be used to improve connection between such components, members or portions. Suitable adhesives are also commercially available and known to the person skilled in the art. They can be chosen in view of the components and/or compositions to be attached to each other. For instance, adhesives include one or more of rubber based, silicone based, isocyanate based, acrylate based, epoxide based, polyurethane based adhesives. Optionally, a curing cement, such as used for retreading tires, can be used to co-cure elastomer composition portions to already cured elastomer composition portions. The use of a green rubber layer is also possible for co-curing. Optionally, one or more functional polymers may be used in one or more of the elastomer compositions and which support co-curing. Such functional groups may comprise but are not limited to one or more of isocyanate, hydroxide, halogenide, amine, amide, carboxylic, epoxide, acrylate, peroxide, and other suitable groups.

In still another preferred embodiment, said axially extending slot and the anchoring portion taper along the axial direction. Due to such a taper, the anchoring portion is only insertable in one axial orientation into the slot. In other words, it is locked with respect to movement in the opposite orientation (and also movement in the radial direction) when being inserted in the slot. Preferably, an anchoring slot comprises two opposite circumferentially extending flange portions holding, anchoring, and/or engaging with the anchoring portion against movement in a radial direction.

In still another preferred embodiment, an anchoring portion at the head portion of the spoke (adjacent the hub portion and/or the radially outer annular connecting portion of the hub portion) comprises two axially extending and adjacent segments tapering in opposite axial orientations. Preferably, the anchoring portion at the head portion tapers from an axial center portion of the head portion towards both of its axially outer ends. Such a design comprising two oppositely tapering portions or segments allows an advanced locking of the spoke in the hub portion and/or its annular connecting portion. Preferably, the hub portion and/or its annular connecting portion comprises two annular connecting portions attachable to each other in an axial direction and/or comprising each an anchoring slot for complementarily receiving one of the tapering segments of the spoke's head portion. The two annular connecting portions hold and/or sandwich (such as by flange portions) the anchoring portion of the head portion in the hub portion against movement (in any direction, and particularly against movement in axial direction and/or in radial direction).

In still another preferred embodiment, multiple adjacent spokes comprise a (respective) anchoring portion held in a respective axially extending slot in the respective adjacent portion of the radially outer circumferential band portion and the radially inner hub portion. Optionally, at least one of these slots tapers in a first axial orientation and at least another one of these slots tapers in a second axial orientation. Optionally, the axial orientations of slots alternate at least over a circumferential sector of the supporting structure. Such an arrangement means that different spokes are inserted from different axial orientations. After partial or full assembly of the spokes in the tire, it is not possible to remove all spokes together in one axial orientation which provides a stable tire, which can be efficiently manufactured.

In still another preferred embodiment, one or more of the spokes comprise or have a cross-section, in a plane parallel to the equatorial plane of the tire, selected from one or more of: X-shapes, V-shapes, C-shapes, I-shapes, H-shapes, O-shapes, S-shapes, Y-shapes, half-X-shapes, and one or more of bent and kinked shapes/forms of the aforementioned shapes. Preferably, the shape is an I-shape. Another preferred shape is a half X-shape, particularly corresponding to the shape of an X essentially cut in the radial direction. It is also possible to mention such a shape as an angled bracket shape, wherein its kink is not necessarily at the radial center of the shape.

In still another preferred embodiment, said anchoring portion is an axially extending and tapering elongated rail, and wherein the complementary anchoring slot is optionally an axially extending and tapering elongated slot. Again, the anchoring portion is preferably held and/or anchored in the slot against movement in a radial direction. Such rail and/or slot shapes help to allow one or more of an easy, defined and stable mounting of the anchoring portion in the respective complementary anchoring slot.

In still another preferred embodiment, the spoke further comprises a circumferentially protruding supporting portion which is in contact with one of a radially inner surface of the radially outer circumferential band portion (e.g., a radially inner surface or side of the radially inner annular connecting portion) and a radially outer surface of the radially inner hub portion (e.g., a radially outer surface of the radially outer annular connecting portion). In other words, said protrusion further supports the spoke against movement in a radial direction.

In still another preferred embodiment, the spoke has a first side and a second side, with respect to a circumferential direction, wherein the supporting portion extends further towards a radial center portion of the spoke on (e.g., only) one of the first side and the second side than on the other one of the first side and the second side. Such a feature helps to provide the spoke with a preferred bending direction (e.g., when the tire and/or spoke is loaded, such as in a radial direction).

In still another preferred embodiment, the spoke has a first supporting portion contacting the radially inner surface of the radially outer circumferential band portion and second supporting portion contacting the radially outer surface of the radially inner hub portion. Optionally, both of the first and second supporting portions extend on one of the spoke's circumferential sides further towards a radial center or center portion of the spoke than on a respective circumferentially opposite side of the spoke.

In still another preferred embodiment, the spoke comprises a rib or a leg portion extending from its head portion to its foot portion. Optionally, such a portion comprises an essentially straight, kinked or bent plane or wall extending from the head portion to the foot portion.

In still another preferred embodiment, the foot portion and the head portion are each extending in an axial direction, at least over 20% (optionally at least over 40%, or at least over 70%) of the maximum axial width of the circumferential band portion.

It is emphasized that features of the embodiments mentioned herein may optionally apply to multiple spokes, a majority of the spokes, or all spokes of the supporting structure and/or the tire. This particularly applies also to further aspects and their embodiments mentioned herein.

In the second preferred aspect, a non-pneumatic tire comprises a radially outer circumferential band portion comprising a circumferential tread portion, a radially inner (circumferential) hub portion, and a (circumferential) supporting structure comprising a plurality of spokes extending from the hub portion to the circumferential band portion. At least one spoke of the plurality of spokes comprises a radially inner head portion adjacent the hub portion and a radially outer foot portion adjacent the circumferential band portion, wherein at least the radially outer foot portion is removably mounted to the radially outer circumferential band portion. For instance, the spoke is free or devoid of an attachment of its radially outer foot portion to the radially outer circumferential band portion via adhesives and/or co-curing. The features of the present aspect allow one or more of a stable and easy assembly and allow also demounting of the spoke from the circumferential band portion, such as for revision purposes.

Preferably, the spoke is removably mounted to the radially inner hub portion and the radially outer band portion (and/or one of the respective annular connecting portions, e.g., as described herein above). Thus, an individual spoke (e.g., each spoke) is removable at both of its radial end portions so that it can be completely demounted. For instance, an individual spoke can be replaced by another spoke, e.g., in the case of damage during use of the tire.

Preferably, the spoke is removably mounted by one or more of a screw connection, a hook-and-loop connection, and mechanical interlocking.

Preferably, a radially inner head portion and a radially outer foot portion of each one of a majority of the spokes or all spokes are removably mounted to a respective adjacent portion (e.g., annular connecting portion) of the radially outer circumferential band portion and the radially inner hub portion by mechanical interlocking. In particular, such a mechanical interlocking may be provided as described in other embodiments herein.

In the third preferred aspect, the non-pneumatic tire comprises a radially outer circumferential band portion comprising a circumferential tread portion, a radially inner (circumferential) hub portion, and a (circumferential) supporting structure comprising a plurality of spokes extending between the hub portion and the circumferential band portion. At least one spoke of the plurality of spokes comprises a radially inner head portion adjacent the hub portion and a radially outer foot portion adjacent the circumferential band portion, wherein the spoke comprises a polymer composition, and wherein at least one of the radially inner head portion and the radially outer foot portion comprises an attachment surface at least partially formed by a material harder than the polymer composition. Still in accordance with the third aspect, a portion (e.g., annular connecting portion) of the radially outer circumferential band portion and the radially inner hub portion, which is adjacent and in contact with the attachment surface, is at least partially formed by or comprises one or more of the material and another material harder than the polymer composition. Use of such harder materials helps to reinforce the interface between the spoke and the adjacent connecting portion and renders the connection between the spoke and the adjacent band portion and/or hub portion more durable.

Preferably, the material and/or said another material is at least 5%, preferably at least 50%, or even more preferably at least 100% harder than the polymer composition. For instance, a first hardness value can be determined for the polymer composition, and a second hardness value can be determined for the material or said another material. Being at least 5% harder means, that the second hardness value is at least 5% higher than the first hardness value. Hardness can be determined herein as Shore-hardness according to ASTM D2240, or equivalent. Optionally, it is noted that the use of metal, e.g., in metal plates, such as one or more of aluminum, iron, brass, copper, and steel falls within each one of these ranges compared to the hardness of elastomer compositions and/or the hardness of thermoplastic polymers or thermoplastic polymer compositions.

Preferably, at least one of the radially inner head portion and the radially outer foot portion comprising the attachment surface is connected to and/or anchored in the portion (e.g., annular connecting portion) of the radially outer circumferential band portion and the radially inner hub portion, which is adjacent and in contact with the attachment surface by mechanical interlocking (or, in other words, form fit).

Preferably, the attachment surface comprises a first rail comprising the material; and, optionally, the portion (such as the annular connecting portion), which is adjacent and in contact with the attachment surface, comprises a second rail comprising one or more of the material and said another material, and wherein the second rail preferably complementarily holds (or anchors) the first rail against movement in a radial direction. In particular, one of the first rail and the second rail is adapted to axially (and optionally slidingly) receive the other one of the first and the second rail.

Preferably, the spoke is an elastomer composition spoke, preferably a rubber composition spoke, and/or one or more of the material and said another material are selected from one or more of a thermoplastic polymer, ceramics, and metal.

Preferably, the attachment surface comprises at least one metal plate.

Preferably, the spoke comprises two bent metal plates, each of them forming an axially extending rail, optionally having an L-shaped cross-section. Optionally, a plurality of cords (preferably extending transversely to the rails) is sandwiched and/or partially enclosed between both metal plates. Preferably, the cords extend through an elastomer composition and/or are coated by an elastomer composition.

In a preferred embodiment, the metal plates are bonded and/or co-cured to an elastomer composition of the spoke.

In still another preferred embodiment, the spoke comprises an elastomer composition and the metal plate is at least partially embedded in and/or cured into the elastomer composition.

In still another preferred embodiment, each of the first rail and the second rail taper along an axial direction. Optionally, the first rail and the second rail allow an axial movement of the first rail relative to the second rail.

In still another preferred embodiment, one or both of the annular connecting portions may each be a single piece ring. Alternatively, one or both of the annular connecting portions may be formed by a plurality of blocks or circumferential segments, which are one or more of co-cured together and attached to each other via an adhesive.

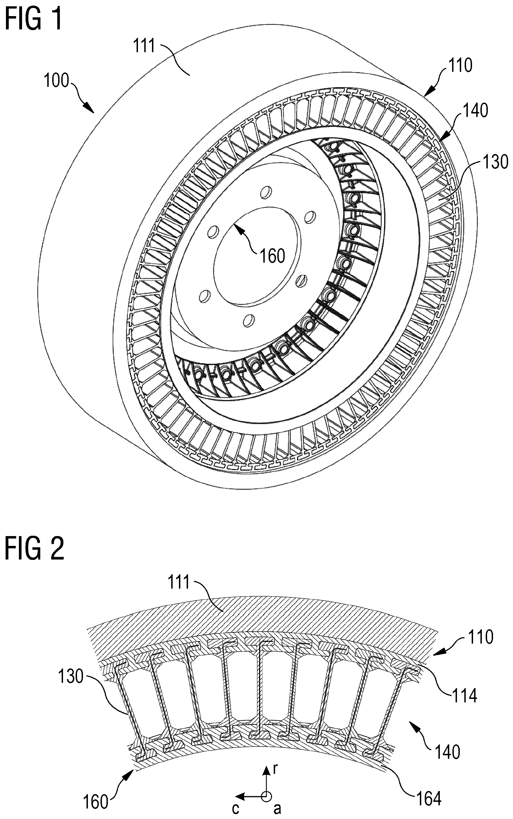

Figure 1 shows a schematic perspective view of the tire 100 comprising a radially outer circumferential band portion 110, a radially inner circumferential hub portion 160 and a (circumferential) supporting structure 140 which supports the circumferential band portion 110 on the circumferential hub portion 160. The circumferential band portion 110, comprises a circumferential (and radially outer) tread band portion 111. The supporting structure 140 comprises a plurality of spokes 130 between the hub portion 160 and the circumferential band portion 110. The connection of the spokes 130 to the hub portion 160 and the radially outer circumferential band portion 110 is shown in further detail in Figure 2.

The schematic cross section of Figure 2 (in parallel to the equatorial plane of the tire, or in parallel to the circumferential centerline of the tire, or equivalent) shows the extension and/or connection of the spokes 130 of the connecting structure 140 between a radially outer and/or circumferential annular connection portion 164 of the hub portion 160 and a radially inner annular connecting portion 114 of the circumferential band portion 110. The circumferential band portion 110 comprises the tread band portion 111 and the circumferential radially inner connecting portion 114. Not explicitly shown herein, the tread band portion 111 optionally comprises a radially outer circumferential tread portion and/or a radially inner circumferential shearband adjacent the annular connecting portion 114.

As visible in Figure 2, each spoke 130 is mechanically interlocked in the radially outer circumferential band portion 110, particularly, in its circumferential annular connecting portion 114. In addition, according to the present nonlimiting embodiment, each spoke 130 is also mechanically interlocked in the radially outer annular connecting portion 164 of the hub portion 160. Each radial end portion of a spoke 130 comprises an anchoring portion which engages in an anchoring slot in a respective annular connecting portion 114, 164. In addition, each of the spokes 130 is schematically shown with a cord reinforcement extending from one end portion to a radially opposite end portion of the spoke 130.

In multiple embodiments and/or figures herein, the circumferential direction c, the axial direction a, and the radial direction r, are indicated for the sake of better orientation. The circumferential direction c is perpendicular to the axial direction a. The same applies to the radial direction r. The axial direction a is parallel to the axis of rotation of the tire. Such directions mentioned herein are not necessarily limited to a specific orientation of the given direction, unless otherwise described herein.

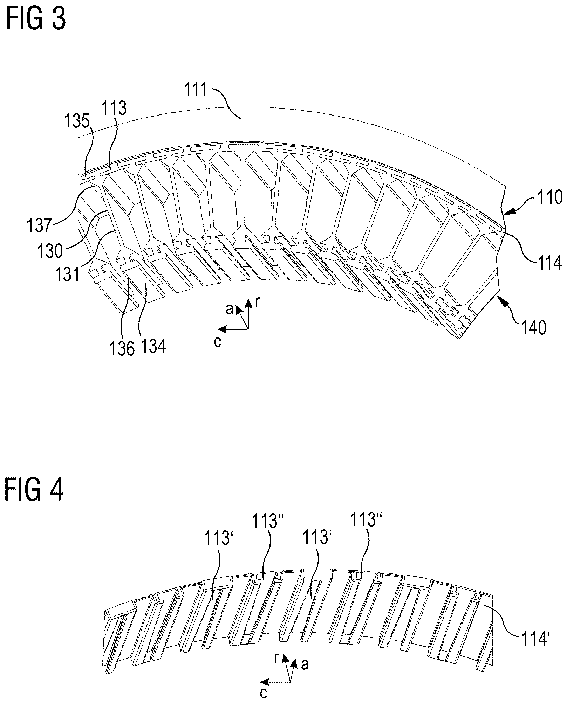

Figure 3, utilizing the same reference signs as in Figures 1 and 2 where appropriate, provides a partial perspective view of the supporting structure 140 and the circumferential band portion 110 (devoid of the annular connecting portion of the hub portion). Each spoke 130 has a radially inner head portion 136 and a radially outer foot portion 137. The radially inner head portion 136 and the radially outer foot portion 137 are connected by a rib portion 131, which extends essentially in the radial and axial directions. On the one hand, the radially outer foot portions 137 comprise anchoring portions 135 which are axially inserted and held (or anchored) in corresponding anchoring slots 113 which are formed as axially extending slots in the annular connecting portion 114. On the other hand, the radially inner head portions 136 comprise anchoring portions 134 insertable into corresponding anchoring slots formed in a corresponding annular connecting portion of the hub portion (not explicitly shown in Figure 3). In the present embodiment, the anchoring portions 134, 135 comprise each a T-shaped cross-section, holding the spokes 130 against radial movement out of the corresponding anchoring slots 113 via mechanical interlocking. However, other cross-sectional shapes of the anchoring portions 134, 135 are possible, such as one or more of dovetail-shaped, H-shaped, double-T-shaped, chevron-shaped, polygonal-shaped, ellipsoidal-shaped, circular shaped, and star-shaped cross-sections. Typically, such cross-sections engage in a corresponding anchoring slot or slot holding and/or anchoring the anchoring portion, particularly against radial movement out of the respective anchoring slot.

Figure 4 shows another preferred embodiment of an annular connecting portion 114' suitable for or of a radially outer circumferential band portion. The depicted annular connecting portion 114' comprises a plurality of anchoring slots 113', 113" (or, in other words rails) extending essentially in the axial direction. In this particular embodiment, the slots 113', 113" taper along the axial direction. In particular, the axial orientation of tapers alternates along the circumference from slot 113' to slot 113". Thus, corresponding spokes are mountable and/or demountable in different (i.e., opposite) axial orientations from one slot 113' to a next circumferentially neighboring slot 113" along the circumferential direction.

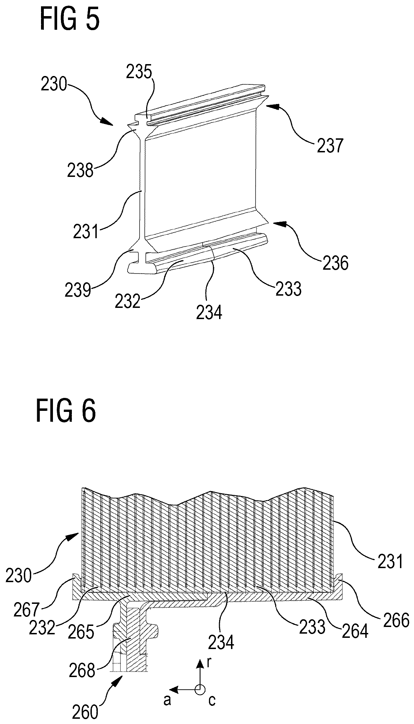

An embodiment of a spoke 230, which is insertable into the slots 113', 113" according to Figure 4, is shown in the perspective view of Figure 5. Spoke 230 comprises a foot portion 237 and a head portion 236, wherein a rib or leg portion 231 extends between those (and in the axial direction, when mounted to a tire). Moreover, the foot portion 237 comprises a T-shaped anchoring portion 235 and a supporting portion 238 which can support the spoke 230 on an adjacent annular connecting portion of a radially outer circumferential band portion of the tire. Only for the sake of illustration, it may be noted that the foot portion 237 has been mentioned as foot portion herein as it can optionally be considered as close to a footprint area of the tire when it is in a vertically lowest position during tire rotation. The head portion 236 comprises also an essentially T-shaped anchoring portion 234 and a supporting portion 239 which can support the spoke 230 on an adjacent annular connecting portion of a hub portion. In the present embodiment, the anchoring portion 234 comprises two axially extending and adjacent segments 232, 233 tapering in opposite axial orientations. In other words, the anchoring portion 234 tapers from an axial center portion towards both of its axial ends. Such a design comprising two oppositely tapering portions or segments 232, 233 allows an advanced locking of the spoke in the hub portion.

A corresponding example for locking the spoke 230 in a hub portion 260 is shown in Figure 6. In particular, a radially inner part of the spoke 230 is shown in contact with two members of the hub portion 260. The shown cross-section extends perpendicularly to the circumferential direction and partially shows the extension of the spoke 230 with its rib portion 231 and parts of the hub portion 260 in the axial and radial directions. In the present embodiment, the hub portion 260 comprises a first annular member or portion 264 and a second annular member of portion 265 which lock together the spoke 230 against axial movement with two flanges 266 and 267, respectively. For instance, for mounting the spoke 230 it is possible to axially insert the spoke 230 into one of the first annular portion 264 and the second annular portion 265, in the absence of the other one of the first annular portion 264 and the second annular portion 265 and to apply and fasten the other one of the first annular portion 264 and the second annular portion 265 afterwards. As shown in Figure 6, it may be possible that the first annular portion 264 and the second annular portion 265 are mountable to a circumferential plate portion 268 of the hub portion 260. It is also possible that the plate portion 268 is integrally formed with one of the first and second annular portions 264, 265, e.g., to simplify the mounting or assembly process. The T-shaped anchoring portion 234 with its two axially oppositely tapering segments 232, 233 is held by the first annular portion 264 and the second annular portion 265 against movement in the axial direction. The spoke 230 is further held against movement in the radial direction and circumferential direction in view of the complementarily shaped slot(s) in the two annular portions 264, 265.

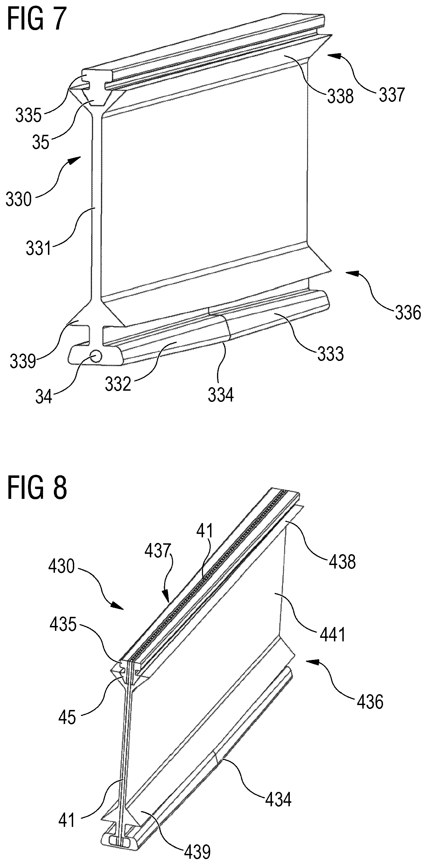

Figure 7 shows another embodiment of a spoke 330 which is similar to the spoke 230 already shown in Figure 5. Thus, the spoke 330 also has a foot portion 337 and a head portion 336 connected by a leg or rib portion 331. The foot portion 337 has an axially tapering anchoring portion 335 and the head portion 336 comprises an axially extending anchoring portion 334 comprising essentially the same shape and/or cross-section as described in the previous embodiment. Thus, the anchoring portion 334 has two oppositely tapering anchoring segments 332 and 333. Moreover, the anchoring portion 334 comprises a cord reinforcement 34 extending preferably essentially axially through that portion. Similar to the previous embodiment, the spoke 330 has two supporting portions 338 and 339 for supporting the spoke 330 on respective adjacent surfaces of annular connecting portions receiving the spoke 330. Furthermore, the spoke 330 according to the present embodiment comprises a foot portion 337 comprising a partially embedded member 35 forming the axially tapering anchoring portion 335 of the spoke 330. In particular, this member 35 is comprised of a material which is harder than a polymer composition comprised in other portions of the spoke such as in the rib portion 331. In particular, the present example shows a spoke comprising a rubber composition, whereas the embedded member 35 preferably comprises a thermoplastic polymer which is at least 5% harder than the rubber composition. For instance, the thermoplastic polymer is a thermoplastic polyester elastomer. Member 35 may be co-cured and/or adhered with an adhesive to become partially embedded within the spoke 330. Optionally, it may have additional protrusions extending into the polymer composition of the spoke to further improve bonding (not shown).

Figure 8 shows yet another embodiment of a suitable spoke 430. This spoke 430 comprises, similarly to earlier described embodiments, a foot portion 437, a head portion 436, and a rib portion 441. The foot portion 437 comprises a partially embedded member 45 defining a T-shape of the connecting portion 435. The foot portion 437 further comprises a supporting portion 438 and the head portion 436 also comprises a supporting portion 439 with a T-shaped connecting portion 434. In addition, the spoke 430 comprises a plurality of cords or a fabric 41 (which is optionally rubber composition coated) extending essentially from the connecting portion 434 of the head portion 436 through the rib portion 441 into the connecting portion 435 of the foot portion 437. In other words, the plurality of cords or the fabric comprising a plurality of cords 41 extends essentially along the radial direction in the supporting structure when the spoke 430 is mounted to the tire. It is also possible to describe the plurality of cords or fabric 41 as being sandwiched between two circumferentially opposite portions of the connecting portion 435 and/or member 45. Preferably, the partially embedded member 45 comprises a thermoplastic polymer which is at least 5% harder than a rubber composition of the spoke 430, such as in its leg portion 441 and/or one or more of the supporting portions 438, 439.

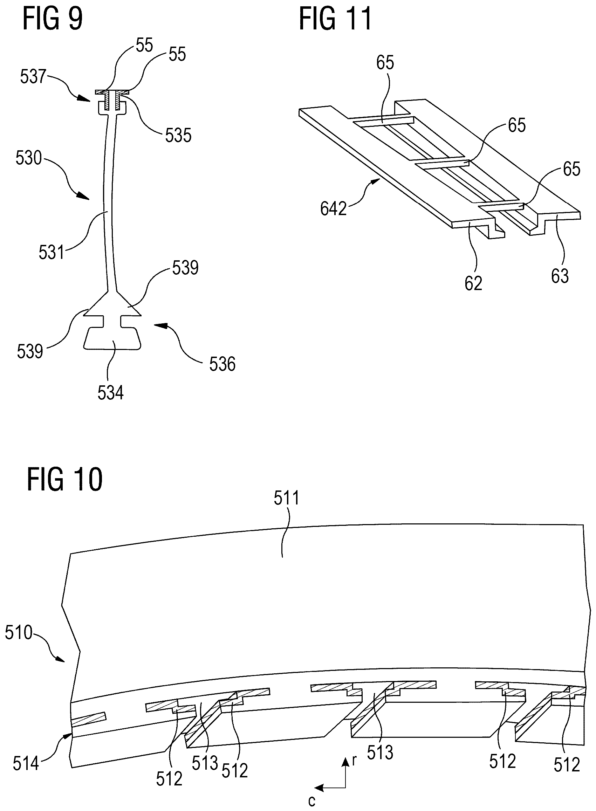

Figure 9 shows still another embodiment of the present invention, in which a spoke 530 comprises two angled metal plates 55 partially defining outer attachment surfaces of the T-shaped anchoring portion 535 in the foot portion 537 of the spoke 530. The metal plates 55 are embedded, particularly cured with a rubber composition which forms the spoke 530, such as including its rib portion 531, the supporting portion 539 and the polygon-shaped connecting portion 534 in its head portion 536. It is noted that the rib portion 531 has in this embodiment a curved shape which provides the spoke 530 with a preferred and/or defined bending direction (e.g., bent and/or pointing in the circumferential direction), such as under radial load. This, is particularly helpful when providing a plurality of circumferentially neighboring spokes in a tire, preferably having essentially the same curved shaped and/or pointing in the same direction.

Figure 10 shows an embodiment of a radially outer circumferential band portion 510 suitable to receive the anchoring portion 535 of the spoke 530 shown in Figure 9 (at smaller scale). The circumferential band portion 510 comprises a tread band 511 and a radially inner annular connecting portion 514 which comprises a plurality of slots 513 (axially extending and having alternating tapers along the circumferential direction) which are at least partially provided with metal plates 512 to contact the attachment surfaces formed by the metal plates 55 of the spoke 530 shown in Figure 9. The metal plates, which are preferably at least partially embedded such as cured with the elastomer or rubber composition material of the spoke 530 and/or the annular connecting portion 514, provide a very robust and durable connection between spokes and the respective annular connecting portion. Furthermore, feasibility and/or reliability of mounting and demounting of the spokes is further improved.

Figure 11 shows another option for the provision of metal plates to an annular connecting portion of a radially outer circumferential band portion. The depicted metal rail 642 has two interconnected metal plate members 62, 63 forming between them an (axially) tapering slot or rail. The two metal plate members 62, 63 are rigidly connected by metal connecting bars or members 65. This embodiment further improves the durability and/or reliability of the connection between a spoke and a corresponding tapering slot. It also provides a defined distance between the two metal plate members 62, 63. For instance, the metal rail 642 may be used instead of the previously described separate metal plates 512 to reinforce a slot in constructions as shown in Figure 10.

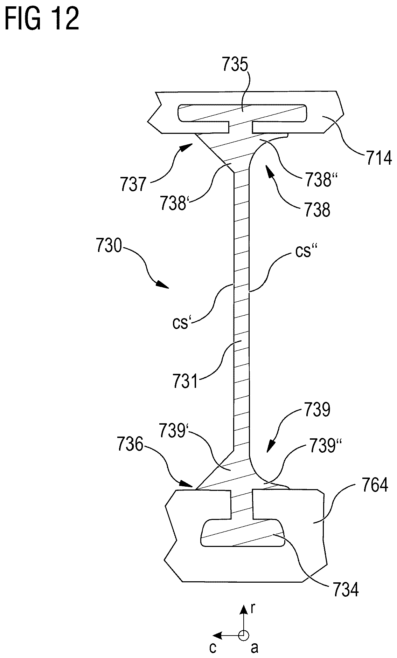

Figure 12 shows another embodiment and/or aspect of the present invention, in which a spoke 730 has a foot portion 737 and a head portion 736. The head portion 736 further comprises an anchoring portion 734 holding and/or anchoring the spoke 730 in a complementarily shaped and axially extending anchoring slot in a connecting portion 764 of a hub portion. The foot portion 737 comprises an anchoring portion 735 holding and/or anchoring the spoke 730 in a complementarily shaped and axially extending anchoring slot in a radially outer band portion 714. The head portion 736 and the foot portion 737 are (e.g., radially) connected by a leg or rib portion 731. In the present embodiment, the spoke 730 comprises two circumferentially asymmetric support portions 738, 739. The support portion 738 of the spoke's foot portion 737 extends in a first portion 738' of the support portion 738 further in the radial direction away from the adjacent band portion 714 on a first circumferential side cs' of the spoke 730 than in a second portion 738" of the support portion 738 on a second circumferential side cs" of the spoke 730. Similarly, at the head portion 736, the supporting portion 736 extends in a first portion 739' on the first side cs' radially further from a surface of the adjacent hub portion 764 than in a second portion 739" on the second side cs", which results in a predetermined and/or defined bending direction of the spoke 730 under radial load.

While not explicitly shown herein, another embodiment comprises multiple circumferential rows of spokes provided axially beside one another, such as two, three or four of such rows. From row to row, circumferential positions of such spokes could be the same or circumferentially shifted.

Multiple of the above embodiments comprise tapering anchoring portions and/or corresponding slots. While these tapering shapes are preferred embodiments of the invention, it is emphasized that those do not constitute essential features of the same. Furthermore, some embodiments comprise anchoring portions with a double taper, whereas it is also possible to provide portions tapering in only one orientation.

The above aspects, embodiments and features thereof may be combined with one another.

In summary, the present invention and/or one or more of its embodiments, help to reduce manufacturing complexity of non-pneumatic tires. The number of co-curing, curing, or adhesion steps during or after tire assembly can be reduced. Spokes may be premanufactured and easily mounted. Mechanical interlocking allows for easy insertion and/or replacement of the supporting structure or spokes. A provision of hard materials, such as metal, in anchoring portions and/or slots can further improve the robustness and/or durability of the tire.

## Claims

1. A non-pneumatic tire comprising:
a radially outer circumferential band portion comprising a circumferential tread portion;
a radially inner hub portion; and
a supporting structure comprising a plurality of spokes extending from the hub portion to the circumferential band portion;
wherein at least one spoke of the plurality of spokes comprises a radially inner head portion adjacent the hub portion and a radially outer foot portion adjacent the circumferential band portion, and wherein:
(i) at least the radially outer foot portion is mechanically interlocked with the radially outer circumferential band portion and/or is removably mounted to the radially outer circumferential band portion; and/or
(ii) the spoke comprises a polymer composition, wherein at least one of the radially inner head portion and the radially outer foot portion comprises an attachment surface at least partially formed by a material harder than the polymer composition, and wherein a portion of the radially outer circumferential band portion and the radially inner hub portion, which is adjacent and in contact with the attachment surface, is at least partially formed by one or more of the material and another material harder than the polymer composition.

2. The non-pneumatic tire according to claim 1, wherein the radially outer circumferential band portion comprises a radially inner annular connecting portion and the radially inner hub portion comprises a radially outer annular connecting portion; and wherein each of the head portion and the foot portion is mechanically interlocked with a respective adjacent annular connecting portion of the radially outer circumferential band portion and the radially inner hub portion.

3. The non-pneumatic tire according to claim 2, wherein each of the annular connecting portions and the spoke comprises one or more polymer compositions, preferably one or more of elastomer compositions and thermoplastic polymer compositions.

4. The non-pneumatic tire according to at least one of the previous claims, wherein at least one of the radially inner head portion and the radially outer foot portion comprises an anchoring portion which is held in a complementary anchoring slot of a respective adjacent portion of the radially outer circumferential band portion and the radially inner hub portion.

5. The non-pneumatic tire according to claim 4, wherein the anchoring portion is one or more of i) inserted along an axial direction, ii) held against movement in a radial direction in an axially extending anchoring slot in the respective adjacent portion of the radially outer circumferential band portion and the radially inner hub portion, and iii) comprising one of a dovetail-shaped cross-section, an H-shaped cross-section, a double-T-shaped cross-section, a chevron-shaped cross-section, a polygonal-shaped cross-section, an ellipsoidal-shaped cross-section, a circular-shaped cross-section, and a star-shaped cross-section.

6. The non-pneumatic tire according to claim 4 or 5, wherein the anchoring slot and the anchoring portion taper along the axial direction.

7. The non-pneumatic tire according to at least one of the previous claims, wherein multiple adjacent spokes comprise an anchoring portion held in a respective axially extending anchoring slot in the respective adjacent portion of the radially outer circumferential band portion and the radially inner hub portion, and wherein at least one anchoring slot tapers in a first axial orientation and at least another anchoring slot tapers in a second axial orientation.

8. The non-pneumatic tire according to at least one of the previous claims, wherein said anchoring portion is an axially extending and tapering elongated rail, and wherein the complementary anchoring slot is an axially extending and tapering elongated slot.

9. The non-pneumatic tire according to at least one of the previous claims, wherein the spoke further comprises a circumferentially protruding supporting portion which is in contact with one of a radially inner surface of the radially outer circumferential band portion and a radially outer surface of the radially inner hub portion.

10. The non-pneumatic tire according to at least one of the previous claims, wherein the spoke has a first side and a second side, with respect to a circumferential direction, and wherein the supporting portion extends further towards a radial center portion of the spoke on one of the first side and the second side than on the other one of the first side and the second side.

11. The non-pneumatic tire according to at least one of the previous claims, wherein the foot portion and the head portion are each extending in an axial direction, at least over 20% of the maximum axial width of the circumferential band portion.

12. The non-pneumatic tire according to at least one of the previous claims, wherein the spoke is removably mounted to the radially inner hub portion and the radially outer circumferential band portion, and, optionally, wherein a radially inner head portion and a radially outer foot portion of each one of the spokes of the tire are removably mounted to a respective adjacent portion of the radially outer circumferential band portion and the radially inner hub portion by mechanical interlocking.

13. The non-pneumatic tire according to at least one of the previous claims, wherein the attachment surface comprises a first rail comprising the material, wherein the portion which is adjacent and in contact with the attachment surface comprises a second rail comprising one or more of the material and said another material, wherein the second rail anchors the first rail against movement in a radial direction, and, optionally, wherein the attachment surface comprises at least one metal plate.

14. The non-pneumatic tire according to at least one of the previous claims, wherein the spoke comprises an elastomer composition and wherein the attachment surface comprises at least one metal plate that is at least partially embedded in the elastomer composition.

15. The non-pneumatic tire according to claim 13 or 14, wherein each of the first rail and the second rail tapers along an axial direction and wherein the first rail and the second rail allow an axial movement of the first rail relative to the second rail.
